# EUROPÄISCHE PATENTSCHRIFT

(11) **EP 1 589 136 B1**
(45) Veröffentlichungstag und Bekanntmachung des Hinweises auf die Patenterteilung: **16.05.2007**
(21) Anmeldenummer: 04009397.3
(22) Anmeldetag: 21.04.2004
(51) Int. Cl.: D04B 35/04, D04B 15/68

(54) **Systemteil mit Bremsfeder**
System member having a braking spring
Elément de système ayant un ressort freinant

(43) Veröffentlichungstag der Anmeldung: 26.10.2005
(73) Patentinhaber: Groz-Beckert KG, 72458 Albstadt (DE)
(72) Erfinder: Braun, Jochen, 72362 Nusplingen (DE); Hennig, Uwe, 72393 Burladingen (DE)
(74) Vertreter: Rüger, Barthelt & Abel Patentanwälte

(56) Entgegenhaltungen:
- EP-A- 1 298 238
- DE-A- 2 043 566
- DE-A- 2 315 836

## Beschreibung

Die Erfindung betrifft ein Systemteil eines Stricksystems einer maschenbildenden Maschine, wie beispielsweise eine Maschinenstricknadel, ein Auswahlteil oder eine Platine oder dergleichen.

Systemteile von Strickmaschinen werden in der Regel in zugeordneten Kanälen, wie beispielsweise Nadelkanälen eines Nadelzylinders oder in ähnlichen schlitzartigen Führungen längs verschiebbar geführt. Die Längsbewegung erhält das betreffende Systemteil von einem geeigneten Antrieb wie einem Schloss, das sich relativ zu einem als Fuß bezeichneten Vorsprung des Systemteils bewegt. Der Fuß greift dann in einen entsprechenden Kanal, der eine der Antriebsbewegung des Systemteils entsprechende Formgebung hat. Dabei besteht zwischen dem Schloss und dem Fuß ein stellenweise relativ großes Spiel. Um trotz dieses Spiels unkontrollierte Bewegungen des Systemteils zu vermeiden, werden in der Regel Maßnahmen zu dessen Bremsung getroffen.

Dazu ist es aus der DE 33 36 212 bekannt, ein gestanztes Strickwerkzeug mit einer leichten seitlichen Biegung zu versehen. Zur Unterstützung derselben ist das Strickwerkzeug auf gesamter Höhe mit einer Vertiefung versehen, die mit einem Dämpfungsmaterial ausgefüllt sein kann. Durch die Biegung legt sich das Strickwerkzeug federnd an die Flanken des entsprechenden Führungskanals an. Die entstehende Reibung bremst Axialbewegungen.

Die Ausnehmung stellt eine Schwachstelle dar. Außerdem kann eine Biegung des gesamten Strickwerkzeugs eine Fehlstellung desselben zur Folge haben.

Des Weiteren sind aus der DE 39 21 506 C1 Strickwerkzeuge für maschenbildende Maschinen bekannt, die mit einer seitlichen Kröpfung versehen sind. Diese Kröpfung kann dazu genutzt werden, sehr schmale Strickwerkzeuge in relativ breiten Führungsnuten zu lagern. Die Zwischenräume sind jedoch verschmutzungsanfällig.

Aus der DE-A-2315836 ist eine Zungennadel für eine Strickmaschine mit einem als Blattfeder ausgebildeten Federfinger bekannt. Dieser Federfinger ist mit seinem einstückigen Ende oder seiner Wurzel in einen entsprechenden Schlitz des Nadelkörpers eingesetzt und einstückig mit diesem verbunden. Die Wandstärke des Federfingers stimmt mit der Wandstärke des Grundkörpers der Zungennadel überein.

Des Weiteren ist aus der DE-A-2043566 eine Zungennadel mit seitlich eingesetzter Blattfeder bekannt. Der Schaft der Zungennadel ist dazu mit einer seitlichen Ausnehmung versehen. Die in diese Ausnehmung eingesetzte Blattfeder ist durch einige Niete mit dem Schaft verbunden.

Davon ausgehend ist es Aufgabe der Erfindung, ein einfaches zuverlässiges Strickwerkzeug zu schaffen, das mit einer Bremseinrichtung versehen ist.

Diese Aufgabe wird mit dem Systemteil nach Anspruch 1 gelöst:

Das erfindungsgemäße Systemteil weist einen Schaft mit zwei zueinander im Wesentlichen parallelen Flanken auf, wobei in wenigstens einer der Flanken eine Ausnehmung ausgebildet ist. Im Bereich dieser Ausnehmung ist eine Federzunge angeordnet, die einstückig mit dem Schaft verbunden ist. Die Federzunge weist somit eine Dicke auf, die geringer ist als die Dicke des Schafts. Die Federzunge ist auf einfache Weise unverlierbar an dem Systemteil gehalten. Die Herstellung ist einfach und prozesssicher. Durch die gegenüber dem sonstigen Systemteil verminderte Dicke kann die Zunge, auch wenn sie nur mit geringer Länge ausgebildet wird, eine hohe Nachgiebigkeit aufweisen. Insbesondere sind flache Federkennlinien erzielbar. Damit wird ein guter Toleranzausgleich auch hinsichtlich der Breite des Führungskanals geschaffen, in den das Systemteil eingesetzt wird. Im Vergleich zu freigestellten Federzungen, deren Dicke mit der Schaftdicke des Strickwerkzeugs übereinstimmt, lassen sich flachere Federkennlinien erzielen.

Die Flanken des Systemteils sind vorzugsweise ebene Flächen, die bedarfsweise flächig an den Flanken eines Führungskanals anliegen können.

Die Dicke der Federzunge ist vorzugsweise deutlich geringer als die Dicke des Systemteils, die durch den Abstand seiner Flanken voneinander bestimmt wird. Dazu kann die Ausnehmung lediglich an einer Seite des Systemteils vorgesehen sein. Es ist aber auch möglich, an beiden Seiten bzw. Flanken des Systemteils Ausnehmungen auszubilden, die zwischen einander einen dünnen Wandabschnitt begrenzen, der zur Ausbildung der Federzunge dient. Diese kann durch einen U-förmigen Schnitt freigestellt sein. Vorzugsweise ist die Breite dieses Schnitts größer als die Dicke der Zunge, was fertigungstechnische Vorteile hat und eine gute Freigängigkeit der Zunge ermöglicht.

Die Federzunge kann sowohl in die Ausnehmung hinein als auch von der Ausnehmung weg gebogen sein. In beiden Fällen kann die Zunge zu ihrem Ende hin sowohl in ihrer Dicke als auch in ihrer Höhe verjüngt ausgebildet sein, um die Flexibilität der Zunge zu verbessern und deren Biegung nicht nur auf ihren Wurzelbereich zu konzentrieren. Eine Verjüngung der Dicke der Zunge kann erreicht werden, indem die Ausnehmung eine zu der Zungenspitze hin zunehmende Tiefe aufweist.

Bevorzugterweise weist die Ausnehmung einen geschlossenen Rand auf. Dies bedeutet, dass sie allseits von einem ansonsten ebenen Abschnitt der Flanke umgeben ist. Die Ausnehmung ist somit insbesondere von der Nadeloberseite her nicht zugänglich, so dass sie wenig oder nicht zum Ansammeln von Schmutz oder Abrieb neigt. Bedarfsweise kann der Rand zu dem Nadelrücken hin unterbrochen sein. Hier ist die Schmutzakkumulationsneigung geringer.

Weitere Einzelheiten vorteilhafter Ausführungsformen der Erfindung sind Gegenstand der Zeichnung, der Beschreibung oder von Ansprüchen. In der Zeichnung sind Ausführungsbeispiele der Erfindung veranschaulicht. Es zeigen:
- Figur 1: ein erfindungsgemäßes Systemteil in Form einer Maschinenstricknadel mit einstückig angeformter Bremsfeder in schematisierter Seitenansicht,
- Figur 2: die Strickmaschinennadel nach Figur 1 in einer ausschnittsweisen perspektivischen Ansicht, in einem anderen Maßstab,
- Figur 3: die Strickmaschinennadel nach Figur 1 und 2, geschnitten entlang der Linie III-III in Figur 1,
- Figur 4: eine abgewandelte Ausführungsform der Nadel nach Figur 1, geschnitten entlang der Linie III-III,
- Figur 5: die Strickmaschinennadel nach Figur 1, geschnitten entlang der Linie III-III in einer weiter abgewandelten Ausführungsform,
- Figur 6: eine Strickmaschinennadel entsprechend der Strickmaschinennadel nach Figur 1 mit einer abgewandelten Zunge in einer ausschnittsweisen Seitenansicht,
- Figur 7: eine abgewandelte Ausführungsform der Strickmaschinennadel entsprechend Figur 3 in einer Schnittdarstellung,
- Figur 8: die Strickmaschinennadel in einem Nadelkanal in einer ausschnittsweisen Draufsicht,
- Figur 9: eine abgewandelte Ausführungsform der Strickmaschinennadel in entspanntem Zustand in horizontal geschnittener, ausschnittsweiser Darstellung und

Figur 10 die Strickmaschinennadel nach Figur 9 in eingebautem Zustand in horizontal geschnittener, ausschnittsweiser Darstellung.

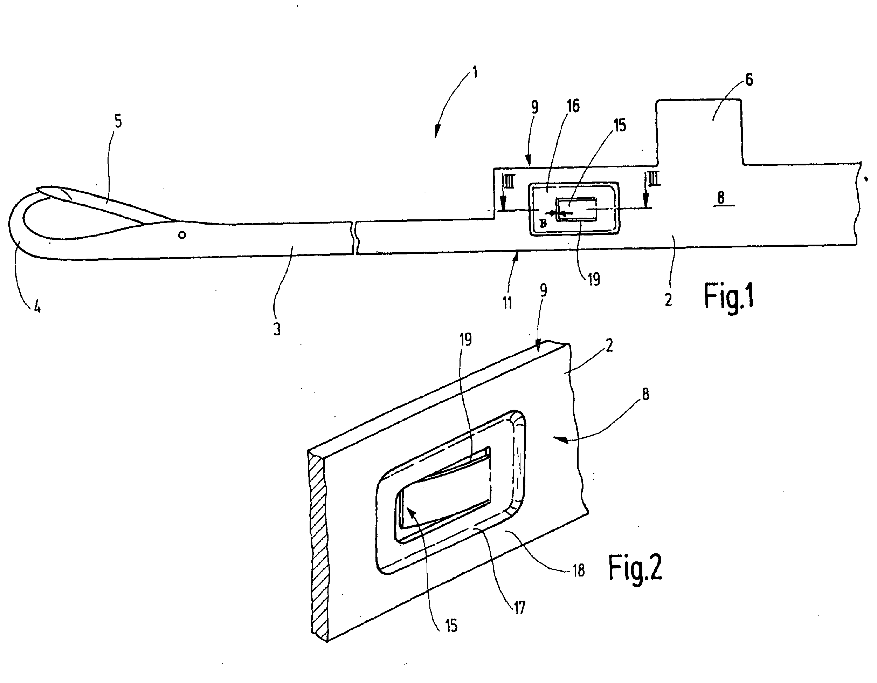

In Figur 1 ist eine Stricknadel 1 veranschaulicht, die zu einem Stricksystem gehört und Teil desselben ist. Die Stricknadel 1 weist einen Schaft 2 auf, der an einem Ende zu einem Schaftbereich 3 geringerer Höhe übergeht, der seinerseits endseitig einen Haken 4 trägt. Diesem kann bedarfsweise eine schwenkbar gelagerte Zunge 5 zugeordnet sein. An den Schaft 2, der ein flaches Teil mit rechteckigem Querschnitt bildet, ist zumindest ein Fuß 6 ausgebildet, der mit einem geeigneten Antrieb, z.B. einem Schloss, zusammenwirkt.

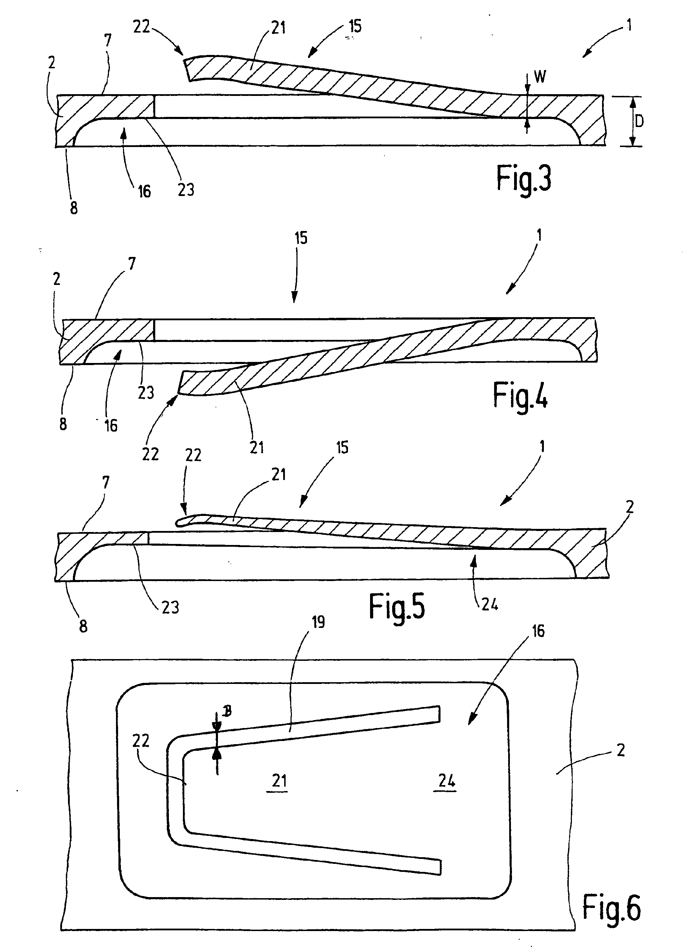

Der Schaft 2 weist, wie aus Figur 3 hervorgeht, zwei vorzugsweise eben ausgebildete Flanken 7, 8 auf, die sich von der Nadeloberseite 9 (Figur 1) bis zu dem Nadelrücken 11 erstrecken.

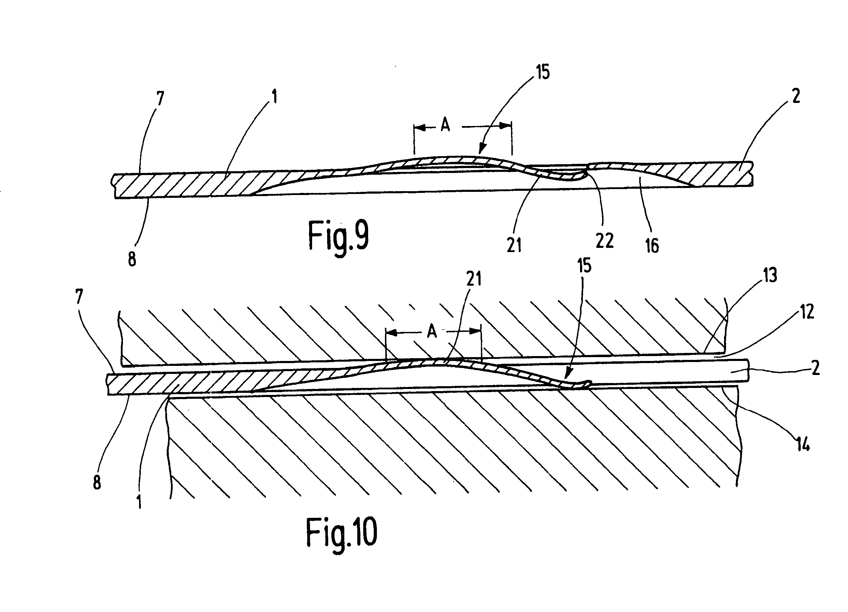

Um die Stricknadel 1 in einem Nadelkanal 12, wie es beispielsweise aus Figur 8 ersichtlich ist, so gegen die Seitenflächen 13, 14 abzustützen, dass die Stricknadel 1 mit einer gewissen Hemmung in Axialrichtung bewegt werden kann, ist an dem Schaft 2 eine Bremsfeder 15 ausgebildet. Dazu ist an einer geeigneten Stelle des Schafts 2 beispielsweise in dem Schaftbereich 3 oder an einer anderen Stelle in der Nähe des Fußes 6 oder auch direkt unterhalb desselben zumindest eine Ausnehmung 16 ausgebildet, die eine flache Vertiefung mit gewölbtem oder vorzugsweise ebenem Boden bildet. Die Ausnehmung 16 ist von einem geschlossenen Rand 17 umgeben, so dass sie sowohl axial nach vorn und nach hinten wie auch zu der Nadeloberseite 9 und dem Nadelrücken 11 hin geschlossen ist. Der Rand 17 wird von einem Flächenbereich 18 der Flanke 8 umgrenzt, der einen geschlossenen Ring um den Rand 17 herum bildet.

Die Ausnehmung 16 bildet eine Vertiefung in der Flanke 8. Dies ist insbesondere aus Figur 3 ersichtlich. Die im Bereich der Vertiefung verbleibende Wandstärke W ist deutlich geringer als die zwischen den Flanken 7, 8 zu messende Dicke D des Schafts 2. Ein u-förmiger Schnitt 19, der z.B. aus Figur 1 ersichtlich ist, stellt die Bremsfeder 15 in Form einer Zunge 21 frei. Die Dicke der Zunge 21 entspricht der Wandstärke W. Die Zunge 21 ist etwas aus der Ebene der Flanke 7 heraus gebogen. Das freie Ende 22 der Zunge 21 kann nach außen hin gewölbt oder gerundet sein.

Der Schnitt 19 kann, wie veranschaulicht, etwa rechteckig sein. Seine Breite B ist vorzugsweise größer als die Wandstärke W, so dass die Zunge 21 mit entsprechendem Abstand zu dem umgebenden Material des Bodens der Vertiefung 16 frei gestellt ist. Damit kann eine Störung der Beweglichkeit der Zunge 21 durch Abrieb, Schmutz oder dergleichen verhindert werden.

Die insoweit beschriebene Stricknadel 1 kann in den Nadelkanal 12 gemäß Figur 8 eingesetzt werden. Die Breite des Kanals 12 ist dabei so gering, dass sich die Zunge 21 bzw. die Bremsfeder 15 federnd an der Seitenfläche 13 abstützt. Dadurch wird die Stricknadel 1 gegen die gegenüber liegende Seitenfläche 14 gedrückt. Es entsteht eine Reibung, die eine Längsbewegung der Stricknadel 1 etwas hemmt. Aufgrund der geringen Dicke der Zunge 21 weist diese eine relativ hohe Nachgiebigkeit und einen großen möglichen Federhub auf. Die zum Ausbilden der Ausnehmung 16 und der Zunge 15 erforderliche Fläche ist relativ gering. Eine wesentliche Schwächung des Schafts 2 hinsichtlich seiner Stabilität ist nicht vorhanden. Bedarfsweise können mehrere solcher Ausnehmungen 16 und Zungen 15 vorgesehen werden.

Figur 4 veranschaulicht eine abgewandelte Ausführungsform der Stricknadel 1. Es wird vollständig auf die vorstehende Beschreibung verwiesen. Im Unterschied zu dieser ist die Zunge 21 nicht von der Ausnehmung 16 weg sondern durch diese hindurch zu der Flanke 8 hin gebogen. Das Ende 22 ist wiederum gerundet.

Während die Ausnehmung 16 bei beiden vorstehend beschriebenen Ausführungsformen einen Boden 23 aufweist, der eben und im Wesentlichen parallel zu der Flanke 8 orientiert ist, ist in Figur 5 eine Ausführungsform einer Stricknadel 1 veranschaulicht, bei der der Boden 23 in einem spitzen Winkel zu der Längsrichtung der Stricknadel 1 und somit in einem spitzen Winkel zu den Flanken 7, 8 orientiert ist. Dadurch verjüngt sich die Zunge 21 hinsichtlich ihrer Wandstärke W von ihrem Anfang d.h. ihrer Wurzel 24 zu ihrem Ende 22 hin. Mit dieser Maßnahme wird es möglich, eine besonders nachgiebige Bremsfeder 15 zu gestalten. Außerdem kann sie besonders klein ausfallen. Der Umriss der Zunge 21 kann jedoch wie bei den vorstehend beschriebenen Ausführungsbeispielen rechteckig sein.

Bei allen vorstehend beschriebenen Ausführungsformen ist es möglich, von dem rechteckigen Zungenumriss abzuweichen. Figur 6 veranschaulicht ein entsprechendes Ausführungsbeispiel einer in ihrer Dicke gemäß Figur 3 oder 4 konstanten oder sich gemäß Figur 5 verjüngenden Zunge 21. Diese weist z.B. einen trapezförmigen Umriss auf. Entsprechend ist der Schnitt 19 etwa v-förmig ausgebildet. Die Zunge 21 kann an ihrem Ende 22 in einer Kante oder auch in einer Rundung oder einer Spitze auslaufen. Durch die einfache oder doppelte Verjüngung der Zunge 21 zu ihrem Ende 22 hin, kann eine besonders gute Nachgiebigkeit der Zunge 21 erreicht werden.

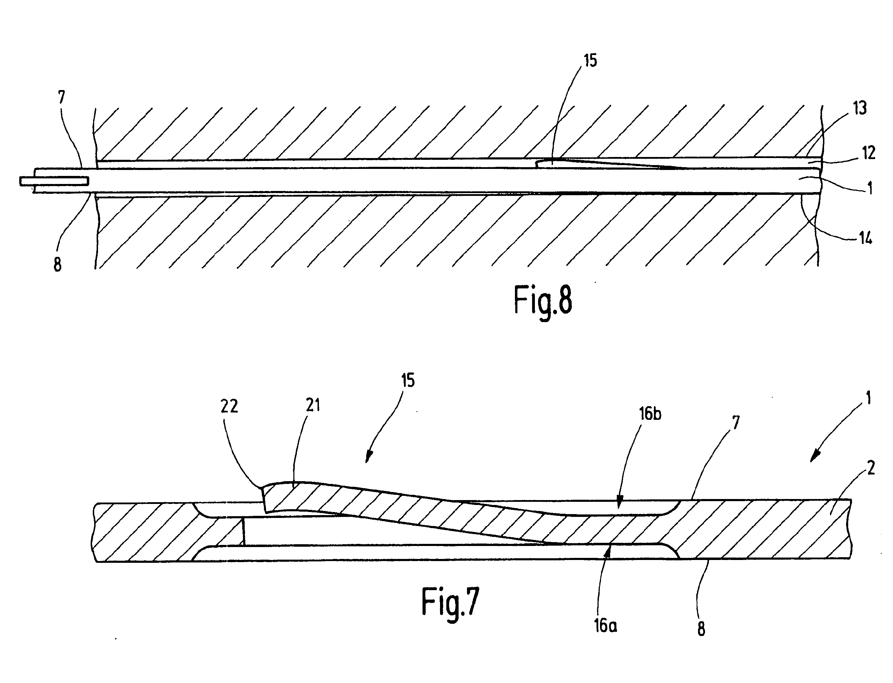

Figur 7 veranschaulicht eine Abwandlung der Stricknadel 1 dahingehend, dass in beiden Flanken 7, 8 der Stricknadel 1 Ausnehmungen 16a, 16b vorgesehen sind. Diese können, wie veranschaulicht, gleich groß und gleich tief ausgebildet sein und eine konstante Tiefe entsprechend den Ausführungsformen nach Figur 3 oder 4 aufweisen. Für jede Ausnehmung 16a oder 16b gilt jedoch, dass diese auch eine von der jeweils anderen Ausnehmung abweichende Größe oder Form aufweisen kann. Insbesondere können eine oder beide Ausnehmungen 16a, 16b entsprechend Figur 5 keilförmig ausgebildet sein. Somit ist die Zunge 21 entweder, wie veranschaulicht, mit einer konstanten Dicke oder keilförmig mit einer Verjüngung zu ihrem Ende 22 hin ausgebildet. Des Weiteren können an einem Schaft 2 mehrere Zungen 21 vorgesehen sein, die zur gleichen Flanke 7 oder 8 oder zu unterschiedlichen Flanken hin ausgebogen sind. Die mehreren Zungen können in einer gemeinsamen Ausnehmung oder in separaten Ausnehmungen untergebracht und rechteckig, trapezförmig oder dreieckig ausgebildet sein.

Figur 9 veranschaulicht eine weitere abgewandelte Ausführungsform der Stricknadel 1. Es wird unter Zugrundelegung gleicher Bezugszeichen vollständig auf die vorstehende Beschreibung verwiesen. Im Unterschied zu dieser ist die Zunge 21 zunächst von der Ausnehmung 16 weg über die Flanke 7 hinaus gebogen, und anschließend am höchsten Punkt der Biegung in die Ausnehmung 16 hineingebogen, so dass ihr gerundetes Ende 22 im Bereich der Ausnehmung 16 liegt.

Im eingebauten Zustand (Figur 10) berührt die Bremsfeder 15 mit ihrem Ende 22 die Seitenfläche 14 und mit ihrem mittleren Abschnitt A die Seitenfläche 13 des Nadelkanals 12. Dabei wird in dem Bereich der Bremsfeder die Stricknadel 1 etwa mittig im Nadelkanal 12 geführt und beidseitig mittels der Bremsfeder 15 an den Seitenflächen 13, 14 des Nadelkanals 12 abgestützt. Das Ende 22 der Zunge 21 des Strickwerkzeugs 1 stützt sich an der Seitenfläche 14 des Nadelkanals 12 ab, die der Flachseite 7, an die die Bremsfeder angebunden ist, entfernt ist bzw. gegenüber liegt.

Ein Strickwerkzeug 1 ist mit einer einstückig an diesem angeformten Bremsfeder 15 versehen, die eine geringere Dicke W aufweist als das Strickwerkzeug 1. Dadurch kann die Bremsfeder 15 eine hohe Nachgiebigkeit und eine weiche Federkennlinie erhalten. Dies lässt sich schon mit kurzen Federlängen erreichen. Dadurch haben Maßabweichungen der Feder nur geringen Einfluss auf die Federkraft. Die Verschmutzungsanfälligkeit ist gering. Ein entsprechendes Strickwerkzeug lässt sich auf einfache Weise herstellen.

### Bezugszeichenliste:

- 1: Stricknadel
- 2: Schaft
- 3: Schaftbereich
- 4: Haken
- 5: Zunge
- 6: Fuß
- 7, 8: Flanken
- 9: Nadeloberseite
- 11: Nadelrücken
- 12: Nadelkanal
- 13, 14: Seitenflächen
- 15: Bremsfeder
- 16, 16a, 16b: Ausnehmungen
- 17: Rand
- 18: Flächenbereich
- 19: Schnitt
- 21: Zunge
- 22: Ende
- 23: Boden
- 24: Wurzel

- A: Bereich
- B: Breite
- D: Dicke
- W: Wandstärke

## Patentansprüche

1. Systemteil (1) eines Stricksystems einer maschenbildenden Maschine,
mit einem Schaft (2), der zwei zueinander im Wesentlichen parallele Flanken (7, 8) aufweist,
mit einer Ausnehmung (16), die in wenigstens einer der Flanken (7, 8) ausgebildet ist und eine Vertiefung in der Flanke (8) bildet,
mit einer federnden Zunge (21), die an dem Schaft (2) in dem Bereich der Ausnehmung (16) angeordnet ist und die über eine der beiden Flanken (7, 8) hinaussteht,
**dadurch gekennzeichnet,**
**dass** die Zunge (21) an dem Schaft (2) ausgebildet und aus dem Schaftmaterial bestehend einstückig mit diesem verbunden ist, so dass deren Wandstärke (W) deutlich geringer ist, als die zwischen den Flanken (7, 8) zu messende Dicke (D) des Schafts (2).

2. Systemteil nach Anspruch 1, **dadurch gekennzeichnet, dass** die Flanken (7, 8) ebene Flächen sind und voneinander einen Abstand aufweisen, der die Dicke (D) des Systemteils (1) bestimmt und dass die federnde Zunge (21) eine Dicke aufweist, die geringer ist als die Dicke (D) des Systemteils (1).

3. Systemteil nach Anspruch 1, **dadurch gekennzeichnet, dass** die federnde Zunge (21) durch einen u-förmigen Schnitt (19) freigestellt ist.

4. Systemteil nach Anspruch 3, **dadurch gekennzeichnet, dass** der Schnitt (19) eine Breite (B) aufweist, die zumindest so groß ist wie die Dicke (W) der Zunge (21).

5. Systemteil nach Anspruch 1, **dadurch gekennzeichnet, dass** die Zunge (21) von der Ausnehmung (16) weg ausgebogen ist.

6. Systemteil nach Anspruch 1, **dadurch gekennzeichnet, dass** die Zunge (21) in die Ausnehmung (16) hinein ausgebogen ist.

7. Systemteil nach Anspruch 1, **dadurch gekennzeichnet, dass** die Zunge (21) eine konstante Dicke (W) aufweist.

8. Systemteil nach Anspruch 1, **dadurch gekennzeichnet, dass** die Zunge (21) zu ihrem freien Ende (22) hin in ihrer Dicke (W) verjüngt ist.

9. Systemteil nach Anspruch 1, **dadurch gekennzeichnet, dass** die Zunge (21) zu ihrem feien Ende (22) hin in ihrer Höhe verjüngt ist.

10. Systemteil nach Anspruch 1, **dadurch gekennzeichnet, dass** die Zunge (21) ein abgerundetes Ende (22) aufweist.

11. Systemteil nach Anspruch 1, **dadurch gekennzeichnet, dass** die Ausnehmung (16) eine konstante Tiefe aufweist.

12. Systemteil nach Anspruch 1, **dadurch gekennzeichnet, dass** die Ausnehmung (16) eine zu dem freien Ende der Zunge (21) hin zunehmende Tiefe aufweist.

13. Systemteil nach Anspruch 1, **dadurch gekennzeichnet, dass** die Ausnehmung einen geschlossenen Rand (17) aufweist.

14. Systemteil nach Anspruch 1, **dadurch gekennzeichnet, dass** das Systemteil (1) eine Maschinenstricknadel ist.

## Claims

1. System part (1) of a knitting system of a stitch-forming machine, with a blade (2), which has two substantially parallel flanks (7, 8), with a recess (16), which is configured in at least one of the flanks (7, 8) and forms a depression in the flank (8),
with a resilient latch (21), which is arranged on the blade (2) in the region of the recess (16) and projects beyond one of the two flanks (7, 8),
**characterised in that**
the latch (21) is configured on the blade (2) and is made of the blade material and joined in one piece with this, so that the wall thickness (W) thereof is significantly less than the thickness (D) of the blade (2) to be measured between the flanks (7, 8).

2. System part according to Claim 1, **characterised in that** the flanks (7, 8) are plane surfaces and are at a distance from one another, which determines the thickness (D) of the system part (1), and that the resilient latch (21) has a thickness, which is less than the thickness (D) of the system part (1).

3. System part according to Claim 1, **characterised in that** the resilient latch (21) is released through a U-shaped cut (19).

4. System part according to Claim 3, **characterised in that** the cut (19) has a width (B), which is at least as large as the thickness (W) of the latch (21).

5. System part according to Claim 1, **characterised in that** the latch (21) is bent out away from the recess (16).

6. System part according to Claim 1, **characterised in that** the latch (21) is bent out into the recess (16).

7. System part according to Claim 1, **characterised in that** the latch (21) has a constant thickness (W).

8. System part according to Claim 1, **characterised in that** the latch (21) is tapered in its thickness (W) towards its free end (22).

9. System part according to Claim 1, **characterised in that** the latch (21) is tapered in its height towards its free end (22).

10. System part according to Claim 1, **characterised in that** the latch (21) has a rounded end (22).

11. System part according to Claim 1, **characterised in that** the recess (16) has a constant depth.

12. System part according to Claim 1, **characterised in that** the recess (16) has a depth increasing towards the free end of the latch (21).

13. System part according to Claim 1, **characterised in that** the recess has a closed edge (17).

14. System part according to Claim 1, **characterised in that** the system part (1) is a machine knitting needle.

## Revendications

1. Élément de système (1) d'un système de tricotage d'une machine formant des mailles, avec une tige (2) pourvue de deux flancs sensiblement parallèles entre eux (7, 8), avec un évidement (16) ménagé dans au moins un des flancs (7, 8) et formant un creux dans le flan (8), avec un clapet élastique (21) qui est disposé sur la tige (2) dans la zone de l'évidement (16) et qui dépasse d'un des deux flancs (7, 8), **caractérisé en ce que** le clapet (21) est attenant à la tige (2) et est relié à celle-ci d'un seul tenant en étant réalisé dans le même matériau, de façon que son épaisseur de paroi (W) soit nettement inférieure à l'épaisseur (D) de la tige (2) mesurée entre les flancs (7, 8).

2. Élément de système selon la revendication 1, **caractérisé en ce que** les flancs (7, 8) sont des surfaces planes et présentent l'un par rapport à l'autre une distance qui est déterminée par l'épaisseur (D) de l'élément de système (1), et **en ce que** le clapet élastique (21) possède une épaisseur qui est inférieure à l'épaisseur (D) de l'élément de système (1).

3. Élément de système selon la revendication 1, **caractérisé en ce que** le clapet élastique (21) est détouré par une découpe en forme de U (19).

4. Élément de système selon la revendication 3, **caractérisé en ce que** la découpe (19) possède une largeur (B) qui est au moins égale à l'épaisseur (W) du clapet (21).

5. Élément de système selon la revendication 1, **caractérisé en ce que** le clapet (21) s'écarte de l'évidement (16) en étant cintré.

6. Élément de système selon la revendication 1, **caractérisé en ce que** le clapet (21) pénètre dans l'évidement (16) en étant cintré.

7. Élément de système selon la revendication 1, **caractérisé en ce que** le clapet (21) possède une épaisseur constante (W).

8. Élément de système selon la revendication 1, **caractérisé en ce que** le clapet (21) diminue en épaisseur (W) en direction de son extrémité libre (22).

9. Élément de système selon la revendication 1, **caractérisé en ce que** le clapet (21) diminue en hauteur en direction de son extrémité libre (22).

10. Élément de système selon la revendication 1, **caractérisé en ce que** le clapet (21) possède une extrémité arrondie (22).

11. Élément de système selon la revendication 1, **caractérisé en ce que** l'évidement (16) possède une profondeur constante.

12. Élément de système selon la revendication 1, **caractérisé en ce que** l'évidement (16) possède une profondeur croissante en direction de l'extrémité libre du clapet (21).

13. Élément de système selon la revendication 1, **caractérisé en ce que** l'évidement possède un bord fermé (17).

14. Élément de système selon la revendication 1, **caractérisé en ce que** l'élément de système (1) est une aiguille de machine à tricoter.
